# EUROPEAN PATENT SPECIFICATION

(11) **EP 0 486 174 B1**
(45) Date of publication and mention of the grant of the patent: **05.10.1994**
(21) Application number: 91309837.2
(22) Date of filing: 24.10.1991
(51) Int. Cl.: C01B 3/48

(54) **Process for producing high purity hydrogen**
Verfahren zur Erzeugung von hochreinem Wasserstoff
Procédé pour obtenir de l'hydrogène de haute pureté

(30) Priority: 16.11.1990 US 614335; 15.03.1991 US 669796
(43) Date of publication of application: 20.05.1992
(73) Proprietor: TEXACO DEVELOPMENT CORPORATION, White Plains, New York 10650 (US)
(72) Inventor: Fong, Wing-Chiu Francis, Yorktown Heights, NY 10598 (US); Chan, Henry Choisun, Bellaire, TX 77401 (US); Suggitt, Robert Murray, Wappingers Fall, NY 12590 (US); Quintana, Manuel Eduardo, Scarsdale, NY 10583 (US)
(74) Representative: Watkins, David

(56) References cited:
- EP-A- 0 217 505
- US-A- 3 545 926
- US-A- 4 533 981

## Description

### BACKGROUND OF THE INVENTION

The present invention relates generally to a process for producing hydrogen and, more particularly, to a process for producing high purity hydrogen from either a refinery offgas feedstock or a specific hydrocarbonaceous feedstock.

There are a variety of known processes for producing hydrogen. Some of the more frequently employed processes include steam reforming of natural gas or naphtha, catalytic reforming of hydrocarbons boiling in the range of heavy straight run (HSR) gasoline or heavy oils (e.g., fuel oil), and the partial oxidation of heavy oils or natural gas. Steam reforming of natural gas is perhaps the most widely employed process for producing hydrogen. However, natural gas, which is a relatively expensive feedstock, can contain certain sulphur species; typically hydrogen sulphide. Since reforming catalysts are extremely sulphur sensitive, the natural gas must undergo expensive pretreatment for sulphur removal, as is known by those skilled in the art.

To our knowledge, the use of the refinery offgas described hereinbelow as a feedstock for the production of high purity hydrogen in any currently known process, including those mentioned above, has never been offered. In fact, refinery offgas is characteristically unsuited to function well as a feed in steam or catalytic reforming. In particular, because of the high olefin content of refinery offgas it cannot be fed to a steam reformer, since the activity of the reforming catalyst rapidly becomes spent due to excess coking. Furthermore, due to the low H₂ content and the high N₂ and carbon oxides content of refinery offgas, it is difficult to recover H₂ from an offgas feed. The presence of sulphur, usually in the form of hydrogen sulphide, in offgas feeds can also present a problem, insofar as the added step of removing sulphur from the feed is necessary, since the catalysts used in the known processes for steam reforming are highly sulphur-sensitive. Similarly, the presence of nitrogen in offgas is problematic since it can be poisonous to some of the hydrogen processing catalysts.

Until now, refinery offgas had very little value and, in fact, imposed a liability on the operator of the refinery, since it must be safely disposed of to comply with environmental regulations due to soot formation by olefins and other unsaturates, such as diolefins and aromatics. Typically, a portion of refinery offgas is used as a supplement fuel to fire the furnaces in a refinery installation and the excess, which is abundant, must be flared. Again, however, because of the high olefin content of refinery offgas, the flame produced can result in undesirable levels of soot.

Moreover to our knowledge, the use of the specific hydrocarbonaceous feedstock, as provided by one aspect of the invention, for the production of high purity hydrogen in a process which includes the sequence of steps described hereinbelow has, heretofore, never been offered. It is further believed that the instant method of producing pressurized, high purity hydrogen utilizing that feedstock has also, heretofore, been unknown.

U.S. Patent No. 3,545,926 describes a process for generating hydrogen from liquid hydrocarbons by partial oxidation followed by a water gas shift reaction and carbon dioxide removal.

U.S. Patent No. 3,874,592 describes a burner for the partial oxidation of hydrocarbons to synthesis gas.

Accordingly, a constructive and profitable use of refinery offgas, which, at the same time, eliminates the need for its safe disposal, provides a remarkable advantage to those skilled in the art.

U.S. Patent No. 4,553,981 describes a process for hydrogen recovery from effluent gas streams. In particular, the effluent gas stream from steam reforming, partial oxidation or coal gasification operations are treated in shift conversion, scrubbing and pressure swing adsorption units for recovery of a purified hydrogen-containing product gas stream. After treatment by partial oxidation and high temperature shift conversion, the effluent stream typically has a composition, in mole percent on a dry basis, of 60-65 percent hydrogen and 30-35 percent carbon dioxide. This patent teaches that a major portion (i.e., more than 70%, preferably 85-99.9%) of the carbon dioxide in the shift conversion effluent stream must be removed via scrubbing before being subjected to pressure swing adsorption for final purification. The high levels of carbon dioxide in the shift conversion effluent stream would result from charging a "heavy" hydrocarbon feed upstream to the partial oxidation unit.

Those skilled in the art certainly appreciate the economic disadvantages associated with a process for producing hydrogen that requires a scrubbing step. The space and costs relating to the installation and operation of the scrubber and equipment associated therewith, e.g., the conduits and refrigeration equipment, to name a few, result in a demand for a more economical approach. In fact, the scrubber and equipment associated therewith can constitute up to 50 percent of the total capital cost required to construct the processing equipment.

Accordingly, a process for producing high purity hydrogen which circumvents the need for practising the expensive scrubbing step would be a significant contribution to those skilled in the art. In other words, this objective would be satisfied in a process where it is unnecessary to remove a major portion of carbon dioxide from the shift conversion effluent stream prior to subjecting said stream to purification by pressure swing adsorption.

US-A-4,869,894 describes a hydrogen generation and recovery process wherein natural gas or another methane-rich gas mixture is subjected to primary reforming by reaction with steam followed by secondary reforming by reaction of residual methane with gaseous oxygen. The separation of CO₂ and other impurities from the primary/secondary reformer effluent is carried out in a vacuum swing adsorption sequence. This process requires a two-step hydrogen generation scheme, which is typical of prior art techniques. Thus, the user of this process is compelled to incur a larger capital investment to manufacture, install and operate the hardware and materials required to practice the process. Moreover the process requires that the feed be desulfurized before being subjected to the primary reforming step.

Accordingly, a process requiring only a single hydrogen generation step is an advantageous improvement.

Accordingly, the process according to the present invention offers those skilled in the art an economical way of process. Moreover the process requires that the feed be desulfurized before being subjected to the primary reforming step.

Accordingly, a process requiring only a single hydrogen generation step is an advantageous improvement.

In one aspect the invention provides a process for producing high purity hydrogen which essentially comprises (1) partially oxidizing a refinery offgas feedstock to produce a synthesis gas mixture of carbon monoxide and hydrogen, (2) reacting said synthesis gas mixture with steam to convert said carbon monoxide into a raw gas mixture which primarily includes carbon dioxide and hydrogen, and (3) purifying said raw gas mixture by pressure swing adsorption to produce high purity hydrogen and a reject gas mixture of impurities.

Said refinery offgas feedstock may include H₂, N₂, O₂, RSH, CH₄, C₂H₆, C₃H₆, C₃H₈, C₄H₈, C₄H₁₀, C₅H₁₀, C₅H₁₂, CO, CO₂, H₂O, H₂S, COS, NH₃, HCN, olefins, diolefins, acetylenes, aromatics and arsenic.

Said refinery offgas feedstock may include up to about 40 percent by volume of hydrogen.

Said refinery offgas feedstock may include from about 8 to about 40 mole percent of H₂, from about 0 to about 10 mole percent N₂, from about 20 to about 60 mole percent CH₄, from about 1 to about 25 mole percent C₂H₄, from about 3 to about 20 mole percent C₂H₆, from about 1 to about 10 mole percent C₃H₆, from about 1 to about 10 mole percent C₃H₈, from about 0.2 to about 5 mole percent C₄H₈, from about 0.2 to about 8 mole percent C₄H₁₀, from about 0 to about 1 mole percent CO, from about 0 to about 2 mole percent CO₂, from about 0 to about 4 mole percent H₂S and H₂O.

Said refinery offgas may be derived from a fluid catalytic cracking unit, a residual coking unit, a delayed coking unit, a fluidized coking unit, a catalytic reforming unit, a hydrotreating unit, or a pressure swing adsorption unit.

Accordingly, the process according to the present invention offers those skilled in the art an economical way of producing high purity hydrogen. The constructive and profitable use of refinery offgas described hereinbelow not only results in the production of high purity hydrogen, but it also adequately circumvents the requirement of safe disposal imposed by environmental regulations.

In another aspect, the invention provides a process for producing high purity hydrogen comprises essentially of (1) partially oxidizing a gaseous hydrocarbonaceous feedstock to produce a synthesis gas mixture of carbon monoxide and hydrogen, said feedstock having a major component which includes at least one C₁-C₃ hydrocarbon and said major component having an average molecular weight of up to 30, (2) reacting said synthesis gas mixture with steam to convert said carbon monoxide into a raw gas mixture which primarily includes carbon dioxide and hydrogen, and (3) subjecting said raw gas mixture to pressure swing adsorption to purify said raw gas mixture, thereby producing high purity hydrogen and a reject gas mixture of impurities.

The gaseous hydrocarbonaceous feedstock may be natural gas, or a combination of natural gas and refinery offgas. The refinery offgas may include up to about 40 percent by volume of hydrogen with an energy value of at least about 26081 KJ/m³ (700 Btu/SCF).

A process according to the invention may further comprise recycling part of the reject gas mixture of impurities in a manner such that the reject gas mixture co-mingles with the synthesis gas mixture, whereby the reject gas mixture is permitted to react with steam to convert carbon monoxide remaining in the reject gas mixture into hydrogen and carbon dioxide, thereby enhancing the production of high purity hydrogen.

A process of the present invention may further comprise recovering a substantial amount of hydrogen sulphide present in the reject gas mixture and processing the hydrogen sulphide to produce elemental sulphur.

A process of the present invention may further comprise directing the reject gas mixture to a burner to enable the reject gas mixture to be used as a clean burning fuel source. The fuel can be employed as a source of energy to preheat the partial oxidation feedstock, or for other processes being practised in the installation (for instance, the refinery or petrochemical plant).

The present invention further relates to a process for producing a pressurized, high purity hydrogen product which comprises essentially the steps of: (1) pressurizing a gaseous hydrocarbonaceous feedstock to a pressure slightly above the desired pressure of the hydrogen product, said feedstock having a major component which includes at least one C₁-C₃ hydrocarbon and said major component having an average molecular weight of up to 30; (2) partially oxidizing said feedstock to produce a synthesis gas mixture of carbon monoxide and hydrogen; (3) reacting said synthesis gas mixture with steam to convert said carbon monoxide into a raw gas mixture which primarily includes carbon dioxide and hydrogen; and (4) subjecting said raw gas mixture to pressure swing adsorption to purify said raw gas mixture thereby producing said pressurized, high purity hydrogen and a reject gas mixture of impurities.

Advantageously, when the process of this invention is employed for the preparation of high purity hydrogen from the feedstock described hereinbelow, a host of shortcomings typically associated with the known methods of producing hydrogen (e.g. steam reforming) are overcome. For instance, no pretreatment of the feedstock is required and the production of the environmentally unsafe NOₓ species is eliminated. Also an H₂ product compressor is not required in the practice of the present invention since the instant process can be performed at high pressures, i.e., up to about 8375 kPa (1200 psig) and any compression can occur at the outset of the process. In steam methane reforming the pressure limitations are up to about 2170 kPa (300 psig). Furthermore, the present process is more energy efficient, inasmuch as the process steps are exothermic and, as a result, energy is produced. In contrast, steam methane reforming is an endothermic process which requires heat input to produce H₂. As a result, the present process consumes from about 10 to about 15 percent less natural gas than steam methane reforming.

The advantage associated with the process of this invention over the process described in U.S. Patent No. 4,553,981 will also be apparent to those skilled in the art.

### BRIEF DESCRIPTION OF THE DRAWINGS

Fig. 1 is a schematic illustration of the steps involved in practising the process of the present invention; and
Fig. 2 is a schematic illustration of an alternative embodiment of the present invention.

### DESCRIPTION OF THE PREFERRED EMBODIMENTS

The feedstock used in the first embodiment of a process of this invention is generally described as refinery offgas. Alternatively, the feed has been referred to as waste gas, vent gas, net gas or tail gas. Refinery offgas, as used herein, generally refers to the various gas streams generated by the individual processing units which are typically present in a refinery. Refinery offgas generally contains saturated and unsaturated hydrocarbons and other impurities, such as organic sulphur, nitrogen species, and inorganic agents including H₂S, COS, SOₓ, NH₃, HCN, and arsine. Some particular components include H₂, N₂, O₂, RSH, CH₄, C₂H₄, C₂H₆, C₃H₆, C₃H₈, C₄H₈, C₄H₁₀, C₅H₁₀, C₅H₁₂, CO, CO₂, and H₂O. The processing units which can produce offgas and, hence, the feed for the instant process, can include the fluid catalytic cracking (FCC) unit, thermal cracking units such as a residual coking, delayed coking or fluidized coking units, the catalytic reforming (CR) unit, the hydrotreating (HT) unit, and the pressure swing adsorption (PSA) unit. The offgas stream from the FCC unit is particularly preferred.

Refinery offgas is generally characterized as including up to about 40 percent by volume of hydrogen and typically has an energy value of at least about 26081 kJ/m³ (700 Btu/SCF), e.g., about 26081 kJ/m³ to about 52162 kJ/m³ (about 700 to about 1400 Btu/SCF). Where a waste gas stream contains more than 40 percent by volume of hydrogen, it is generally preferred to recover a portion of the hydrogen by, for instance, pressure swing adsorption and, thereafter, employ the reject gas, which now contains less than 40 percent by volume of hydrogen, as the feedstock in the process of the present invention.

Table I is provided to illustrate the concentration of the components present in the offgas feedstock. A typical composition of a preferred offgas stream from a FCCU cryogenic residue unit is also provided in Table I.

**TABLE I**

| Component | Mole Percent Range | FCC Unit Offgas* |
|---|---|---|
| H₂ | 8 - 40 | 19.54 |
| N₂ | 0 - 10 | 7.41 |
| CH₄ | 20 - 60 | 40.47 |
| C₂H₄ | 1 - 25 | 17.79 |
| C₂H₆ | 1 - 20 | 14.37 |
| C₃H₆ | 0 - 20 | 0.06 |
| C₃H₈ | 0 - 20 | 0.37 |
| C₄H₈ | 0 - 5 | - |
| C₄H₁₀ | 0 - 8 | 1.0 |
| C₅+ | 0 - 5 | - |
| CO | 0 - 5 | 1.0 |
| CO₂ | 0 - 5 | 250 ppm |
| O₂ | - | 1000 ppm |
| Acetylene | - | 100 ppm |
| Diolefins | - | 100 ppm |
| Aromatics | - | 200 ppm |
| RSH (mercaptans) | - | 10 ppm |
| H₂S | 0 - 4 | 10 ppm |
| COS | 0 - 1 | 10 ppm |
| SOₓ | - | 15 ppm |
| NH₃ | - | 5 ppm |
| HCN | - | 10 ppm |
| Arsine | - | 20 ppb |
| Btu/SCF | 700 - 1400 | 1027 |

| | | |
|---|---|---|
| * - Values represent mole percent unless indicated otherwise. | | |

The presence of arsenic, appearing as arsine (AsH₃), in a refinery offgas is dependent on crude source. However, as more "less-desirable" heavier crudes find their way into refineries, the more likelihood arsenic will be found. In particular, shale oil recovered from the retorting of oil shale has been found to contain arsenic. With the increasing concerns for the environment, it is important that materials, such as arsenic, be isolated before they are discharged to the environment. The process of the present invention further satisfies this objective.

Although the preferred offgas feed used in the present process is of FCC origin, it is to be understood that offgases from other petroleum and chemical processing units can be used and may also contain species which require removal or destruction before the offgas can be combusted. For example, waste gas streams containing organic nitrogen compounds, such as amines or nitriles, when burned (fully combusted) produce NOₓ in amounts that exceed environmental discharge limits. Advantageously, in accordance with the present invention, the partial oxidation of organic nitrogen compounds generates only nitrogen, a limited amount of ammonia, and a trace of hydrogen cyanide. The latter fixed nitrogen compounds are easily separated and NOₓ formation on burning the syngas containing only N₂ is minimized.

In the practice of the present invention, the offgas feed is preheated to a temperature of between about 93°C to 371°C (200°F to 700°F). The offgas can be heated, for instance, in a fire heater or a heat exchanger.

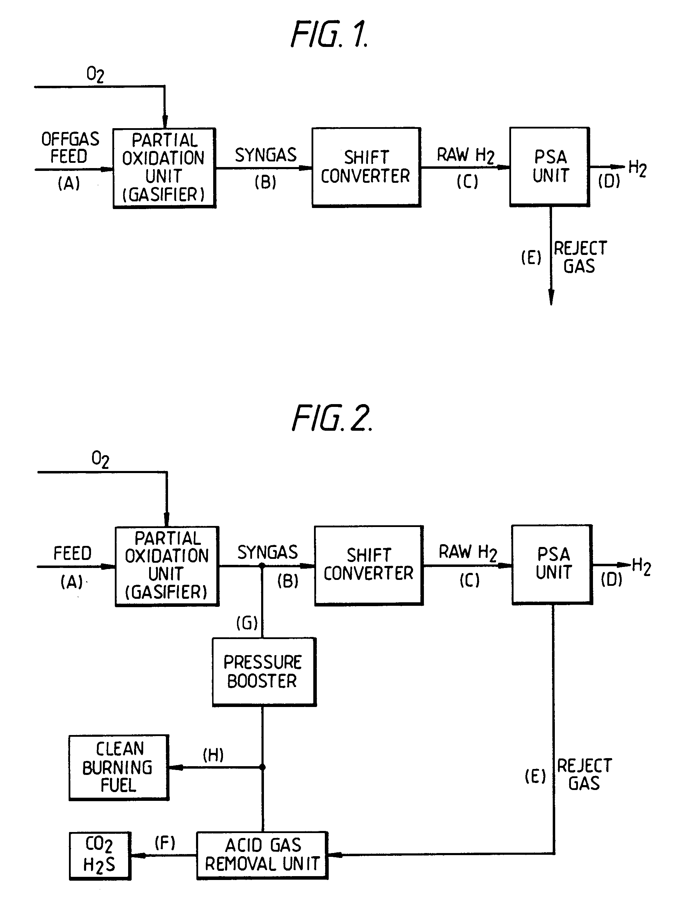

In the first step of the present process, the offgas feed is partially oxidized to produce a synthesis gas mixture of carbon monoxide and hydrogen. More specifically, as shown in Fig. 1, the preheated offgas feed is charged into a partial oxidation unit at a rate of about 0.113 million to 1.13 million std m³ per day (about 4 million to about 40 million standard cubic feet per day (mmscfd)). The pressure of the offgas feed corresponds to the desired pressure of the end product, i.e., the hydrogen. As shown, the partial oxidation unit is also charged with an O₂ stream to permit the partial oxidation of the offgas feed. The O₂ is introduced separately from the offgas feed into the partial oxidation unit by a partial oxidation burner, such as the one described in U.S. Patent No. 3,874,592. The oxygen consumption rate is typically between about 100 tons per day to about 1200 tons per day which, advantageously, is about 10 to about 25 percent lower than the O₂ consumption rate required to partially oxidize similar quantities of natural gas, oil or coal feedstocks. The offgas feed stream has a minimum energy value of 26081 kJ/m³ (700 Btu/SCF), more typically 29807 to 52162 kJ/m³ (800 to 1400 Btu/SCF) and, accordingly, functions well as a feedstock to a partial oxidation unit; specifically, the instant offgas feed can be partially oxidized quite easily because of its heating value.

In a preferred embodiment, the partial oxidation unit is a gasifier which includes a refractory-lined pressure vessel and auxiliary gas cooling means, such as a heat recovery steam generator or a quenching chamber, which is further discussed hereinbelow. The gasifier is typically operated at a temperature of about 1204°C (2200°F) to about 1538°C (2800°F) and a pressure of from about 1379 kPa (200 psig) to about 8375 kPa (1200 psig). The residence time of the reactants in the partial oxidation unit is usually about 2 to about 4 seconds. Thus, a predetermined quantity of the offgas is partially oxidized in the gasifier in about 2 to about 4 seconds. In the partial oxidation unit, synthesis gas ("syngas") (i.e., carbon monoxide and hydrogen) is produced, preferably in an amount of at least about 2.0 - 3.5 moles of syngas per mole of offgas feed.

Internal steam is also generated in the partial oxidation unit (gasifier), which is advantageously employed in the shift converter as described with particularity below. Before the syngas exits the partial oxidation unit, it is cooled in a quenching medium, such as water. The means for quenching the syngas (e.g., quench bath) can be contained in the partial oxidation unit or, alternatively, can be disposed outside of the unit and positioned in a manner such that the syngas can be directed through the quenching means and, thereafter, directed into the carbon monoxide shift converter.

With this partial oxidation operation, the volume of the synthesis gas product is at least two (2) times the volume of the offgas feed. Thus, the nitrogen content of the syngas is diluted at least twofold. Significantly, it is more efficient and easier to remove the diluted quantities of nitrogen.

The syngas mixture generated in accordance with the present invention, i.e., generated with the offgas feedstock, includes a hydrogen content of at least about 59 percent by volume and a carbon monoxide content of at least about 30 percent by volume. Contrariwise, the syngas mixture resulting from the partial oxidation of a natural gas or oil feedstock includes an H₂ concentration of about 48 percent and a CO concentration of about 43 percent. The syngas mixture generated in accordance with the present process is desired since more hydrogen is produced and less CO is produced, which means that the CO shift converter is used less.

In the next step, the syngas stream is directed from the partial oxidation unit into the shift converter. More particularly, hot synthesis gas from the gasifier is quickly cooled by direct contact with water, as described above, at the pressure of the synthesis gas generator (gasifier) and passed directly to the carbon monoxide shift conversion reactor. As described in U.S. Patent No. 3,545,926, sufficient water is vaporized into the hot synthesis gas to supply the steam required for the shift conversion reaction. The steam is reacted with the carbon monoxide present in the syngas to produce a raw gas mixture of carbon dioxide and hydrogen. With operating pressures circa 6895 kPa (1000 psi), the equilibrium temperature of the quenched synthesis gas is near 260°C (500°F). Since the shift converter operates at temperatures from 260°C to 510°C (500 to 950°F), preferably 288°C to 482°C (550°F to 900°F), it may be necessary to warm the inlet gas to the shift converter by heat exchange against the exit gas. The carbon monoxide shift reaction which produces hydrogen and carbon dioxide is slightly exothermic and the temperature of the gas rises across the shift catalyst to a temperature circa 371°C to 510°C (700°F to 950°F), depending upon the amount of carbon monoxide present and equilibrium conditions.

In a preferred embodiment, at least about ninety (90) percent of the carbon monoxide is converted to carbon dioxide and hydrogen. The shift conversion reaction is preferably conducted in one or more fixed-bed catalytic reactors disposed in the shift converter. In the present process, the shift conversion reaction advantageously occurs in two stages or, more appropriately, two shifts. Typically, a three (3)-stage shift conversion is employed in conventional processes for producing high purity hydrogen. Where more than one fixed-bed reactor is employed, cooling means, which by way of illustration can include an intercooler or a heat exchanger, are positioned between the various beds to prevent the temperature from getting too high, as this would adversely affect the equilibrium conversion. It is desirable to maintain the reaction temperature within a range of about 316°C (600°F) to about 538°C (1000°F) in the first shift (or stage) and from about 260°C (500°F) to about 427°C (800°F) in the second shift. Preferably, the temperature is maintained at about 454°C (850°F) in the first shift and about 343°C (650°F) in the second shift.

The catalyst employed in the shift conversion reaction preferably includes chromium and iron oxide as is known by those skilled in the art. This catalyst is used to promote the following shift reaction: CO + H₂O → CO₂ + H₂.

The shift conversion reactor serves to destroy or retain unwanted contaminants present in the feedstock. For example, hydrogen cyanide is hydrolyzed to form ammonia, hydrogen and carbon dioxide. If arsenic is present or suspected in the refinery offgas, then the carbon monoxide shift conversion catalyst should be protected by a suitable guard bed to remove the arsenic materials from the synthesis gas. A suitable guard bed material is a hydrotreating catalyst, such as a cobalt, molybdenum or alumina catalyst, operated at a temperature approximately 28°C (50°F) above the dew point of the quenched synthesis gas.

The next step of the present process involves purifying the raw gas mixture produced in the shift conversion reaction described above. The gas effluent exiting the shift converter consists primarily of raw carbon dioxide and hydrogen. Impurities present in the raw gas mixture typically include nitrogen, carbon monoxide, methane, hydrogen sulphide, and water. After the synthesis gas has been treated in the carbon monoxide shift converter, it is cooled to remove water. Any chloride, now present as HCl, and ammonia condense out with the water and are removed from the gas. Accordingly, the impure gas effluent is directed from the shift converter into a hydrogen purification unit to remove remaining impurities from the raw effluent stream.

The purification unit employed is a Pressure Swing Adsorption (PSA) unit (as shown) which removes the impurities from the raw stream by use of a pressure change on the adsorbent beds. This facilitated means of acid-gas removal and hydrogen purification is another significant feature of the present invention. In conventional processes, the raw stream would typically undergo treatment with an amine solution, followed by a methanation process, followed by a copper liquor washing process and, finally, followed by a molecular sieve dryer process.

As shown in Fig. 1, two effluent streams emerge from the PSA unit. One of the streams is a reject gas which includes the separated impurities, such as N₂, CO₂, CO, CH₄, NH₃, and H₂S. Also included in the reject gas stream is a small amount of unrecovered H₂.

The second stream emerging from the PSA unit is high purity hydrogen. The hydrogen produced by the process of this invention is at least about 99 percent pure. The high purity hydrogen produced is recovered using conventional means and can be used in a variety of applications. These include, but are not limited to, hydrotreating, hydroprocessing, hydrocracking, methanol production, oxoalcohol production, isomerization processes, etc.

The process of this invention includes additional embodiments which essentially involve the optional treatment and/or use of the reject gas exiting the PSA unit. It is to be understood that in each of the additional embodiments described below, practice of the invention includes the process steps described above.

In one such additional embodiment, the reject gas is recycled to the shift converter to enhance the recovery of hydrogen. This embodiment can enhance the recovery of hydrogen by about 5 to about 10 percent. In particular, referring to Fig. 2, the reject gas exiting the PSA unit is first fed to an acid gas removal unit to recover carbon dioxide as a by-product and hydrogen sulfide prior to entering the CO shift converter. Acid gas removal can be effectuated by the well known Benfield Process or amine solution processes, where the operative amine solutions include monoethanolamine (MEA), diethanolamine (DEA) or Selexol, a polyethoxyether. A portion of the reject gas from the acid gas removal unit is boosted in pressure in a pressure booster and then directed into the shift converter, either by introducing it into the syngas feed stream (as shown) or, alternatively, by directly introducing it into the shift converter. In any event, the objective is to permit the reject gas to co-mingle with the synthesis gas mixture so that the reject gas is permitted to react with the steam in the shift converter to convert carbon monoxide present in the reject gas into the raw gas mixture described above.

Inasmuch as it is necessary to provide a means to remove inert gases, such as nitrogen, from the system, part of the reject gas from the acid gas scrubber is drawn off as shown at stream (H). Since this stream contains essentially only methane, carbon monoxide and hydrogen in addition to nitrogen, it is clean burning fuel.

The amount of clean burning fuel stream (H) which can be used as fuel is dependent on the amount of nitrogen present. It is to be noted that the heating value of the bleed gas (stream (H)) needs to be maintained at not less than 5589 KJ/m³ (150 Btu/SCF), preferably 9315 kJ/m³ (250 Btu/SCF) to produce a good quality fuel. Generally, sufficient acid gas scrubber reject gas should be drawn off to keep the nitrogen content below 30 percent. Removal of the acid gases, in particular the carbon dioxide, prior to diversion to fuel greatly improves the heating quality of the gas, as well as improve recovery of hydrogen from that portion of the acid gas scrubber reject gas reinjected into the carbon monoxide shift converter feed.

In a second alternative embodiment, the reject gas is directed from the purification unit (e.g., PSA unit) to a burner where it can be used as a fuel source to preheat feedstreams, such as the refinery offgas, to the partial oxidation unit or to the carbon monoxide shift unit or for other processing units in the refinery installation. From the environmental perspective, the reject gas from the PSA unit is a better fuel source than the refinery offgas exiting the refinery processing units, for instance, the FCC unit. As stated above, refinery offgas has a high unsaturated hydrocarbon content which, when burned, generates a flame that produces soot. Since the reject gas from the PSA unit is completely devoid of olefins and other unsaturates, the flame it produces when heated does not produce nearly the same levels of soot.

In a third alternative embodiment, the PSA unit reject gas is treated to remove hydrogen sulphide which can subsequently be processed to obtain elemental sulphur. This embodiment is particularly beneficial where there are relatively considerable amounts of hydrogen sulphide in the offgas feed. The hydrogen sulphide can be removed from the PSA unit reject stream in any known manner. One way of effectuating its removal includes directing the reject stream through an acid-gas scrubber to remove any hydrogen sulphide from the reject stream.

The removal of hydrogen sulphide from the PSA unit reject gas is preferred over removing it from the refinery offgas. Where sulphur is present in the original offgas feed, it is usually combined in part with organic matter, making its removal more difficult than it would be to remove hydrogen sulphide from the PSA via acid gas scrubbing.. The sequence of gasification followed by conversion shifting makes sulphur more available by acid gas extraction.

Elemental sulphur can be produced in any known manner; oxidation processes, such as the Claus system, are generally preferred.

The following examples are offered to further illustrate the manner and means for practicing certain embodiments of the present invention.

### EXAMPLE I

This example is offered to illustrate a preferred manner of practicing the process of the present invention without the optional recycle step. In Table II, preferred pressure, temperature and flow rate parameters are provided for each of the gas streams involved in the process. In Table III, the components which are included in each gas stream are provided in moles on a dry basis. In both Table II and Table III, each gas stream is represented by a written character as follows:
- A -: offgas feed entering the partial oxidation unit
- B -: gas effluent from the partial oxidation unit (primarily syngas) which enters the shift converter
- C -: gas effluent from the shift converter which enters the purifier (e.g., PSA Unit)
- D -: high purity H₂ stream from the purifier
- E -: reject gas stream (tail gas) from the purifier

**TABLE II**

| Parameters | Gas Streams | | | | |
|---|---|---|---|---|---|
| | A | B | C | D | E |
| Pressure kPa (psig) | 3103 (450) | 2930 (425) | 2758 (400) | 2689 (390) | 35 (5) |
| Temperature °C (°F) | 316 (600) | 343 (650) | 38 (100) | 43 (110) | 32 (90) |
| Flow million std m³ per day (mmscfd) | 0.32 (11.4) | 1.03 (36.5) | 1.35 (47.9) | 0.85 (30) | 0.5 (17.9) |

**TABLE III**

| Component | Gas Streams | | | | |
|---|---|---|---|---|---|
| | A | B | C | D | E |
| H₂ | 17.5 | 59.3 | 71.0 | 99.75 | 22.8 |
| N₂ | 6.6 | 2.0 | 2.0 | 0.25 | 4.9 |
| CH₄ | 36.0 | 2.5 | 2.7 | - | 7.2 |
| C₂H₄+C₂H₆ | 28.7 | - | - | - | - |
| C₃H₆+C₃H₈ | 8.2 | - | - | - | - |
| C₄H₈+C₄H₁₀ | 2.0 | - | - | - | - |
| C₅ + | 1.0 | - | - | - | - |
| CO | - | 35.6 | 3.4 | - | 9.1 |
| CO₂ | - | 0.6 | 20.9 | - | 56.0 |
| H₂O | unsat.d | sat.d | sat.d | dry | sat.d |

### EXAMPLE II

This example is offered to illustrate a preferred manner of practicing an alternative embodiment of the process of this invention which includes the optional step of recycling the reject gas from the PSA unit through an acid gas removal unit and then into the syngas stream before it enters the shift converter, to enhance the recovery of H₂. Tables IV and V show the operating parameters and the components concentration in moles on a dry basis, respectively. Streams A - E are the same as used in Tables II and III. In Tables IV and V, gas streams F, G and H are representative of the following:
- F -: carbon dioxide stream from the acid gas removal unit
- G -: slipstream effluent from the CO₂ removal unit which re-enters the shift converter along with unconverted syngas
- H -: bleed stream of offgas effluent from the CO₂ removal unit taken to control buildup of inerts (nitrogen) in system, used as clean burning fuel

**TABLE IV**

| Parameters | Gas Streams | | | | | | | |
|---|---|---|---|---|---|---|---|---|
| | A | B | C | D | E | F | G | H |
| Pressure kPa (psig) | 3103 (450) | 2930 (425) | 2758 (400) | 2689 (390) | 35 (5) | 35 (5) | 2930 (425) | 35 (5) |
| Temperature °C (°F) | 316 (600) | 343 (650) | 38 (100) | 43 (110) | 32 (90) | 32 (90) | 38 (100) | 38 (100) |
| Flow million std m³ per day (mmscfd) | 0.31 (10.9) | 0.98 (34.8) | 1.39 (49.6) | 0.85 (30) | 0.56 (19.6) | 0.33 (11.7) | 0.1 (3.4) | 0.13 (4.5) |

**TABLE V**

| Components | Gas Streams | | | | | | |
|---|---|---|---|---|---|---|---|
| | A | B | C | D | E | F | G & H |
| H₂ | 17.5 | 59.3 | 68.7 | 99.75 | 20.6 | - | 56.0 |
| N₂ | 6.6 | 2.0 | 2.3 | 0.25 | 5.4 | - | 13.0 |
| CH₄ | 36.0 | 2.5 | 3.1 | - | 7.8 | - | 19.0 |
| C₂H₄+C₂H₆ | 28.7 | - | - | - | - | - | - |
| C₃H₆+C₃H₈ | 8.2 | - | - | - | - | - | - |
| C₄H₈+C₄H₁₀ | 2.0 | - | - | - | - | - | - |
| C₅ + | 1.0 | - | - | - | - | - | - |
| CO | - | 35.6 | 2.6 | - | 6.5 | - | 12.0 |
| CO₂ | - | 0.6 | 23.2 | - | 59.7 | 100 | - |
| H₂O | unsat.d | sat.d | sat.d | dry | sat.d | - | - |

The feedstock used in the following embodiments of a process of this invention is generally described as a gas containing a mixture of hydrocarbons. More specifically, a significant characteristic of the feed employed in the process of this invention is that a major portion, that is, a substantial amount, of the hydrocarbons in the gas are at least one and, more practically, a mixture of C₁-C₃ hydrocarbons having an average molecular weight of up to about 30. That is to say, the hydrocarbon feed is dominated by a major component including at least one C₁-C₃ hydrocarbon(s), the combination (the major portion) of which has an average molecular weight of up to about 30. Accordingly, only trace amounts of heavier hydrocarbons should be present in the feed.

By using the gaseous hydrocarbon feed described above in the process of the present invention, the shift conversion effluent stream will not contain as high a concentration of carbon dioxide as that described in U.S. Patent No. 4,553,981 and, as a result, the expensive scrubbing step required in the process described in the '981 patent is circumvented. Also, the ratio of H:CO₂ in the shift conversion effluent stream will be greater when one practices the process of the present invention. Inasmuch as hydrogen is the desired end product, this is yet another advantage associated with the instant process.

By way of illustration, natural gas is representative of the type of feed contemplated herein. In fact, natural gas is a preferred feedstock. A typical natural gas composition is given below in Table A. All values identified are representative of the mole percent unless otherwise indicated.

**Table A**

| Component | Concentration |
|---|---|
| H₂ | 0-5 |
| N₂ | 0-2 |
| CH₄ | 60-98 |
| C₂H₆ | 2-20 |
| C₃H₈ | 1-10 |
| C₄H₁₀ | 0-5 |
| C₅⁺ | 0-5 |
| CO₂ | 0-3 |
| H₂S | 0-200 ppm |
| H₂O | 0-saturated |

As shown in Table A, a substantial amount (major component) of the hydrocarbons present in the natural gas composition are C₁-C₃ hydrocarbons (predominantly methane), having, in combination, an average molecular weight of about 30.

Another preferred feedstock used in the process of this invention can include natural gas in combination with refinery offgas. Refinery offgas, as used herein, generally refers to the various gas streams generated by the individual processing units which are typically present in a refinery. Refinery offgas generally contains saturated and unsaturated hydrocarbons and other impurities, such as organic sulphur, nitrogen species, and inorganic agents including H₂S, COS, SOₓ, NH₃, HCN, and arsine. Some particular components include H₂, N₂, O₂, RSH, CH₄, C₂H₄, C₂H₆, C₃H₆, C₃H₈, C₄H₈, C₄H₁₀, C₅H₁₂, CO, CO₂, and H₂O. The processing units which can produce offgas and, hence, the supplemental component used in the feed for the instant process, can include the fluid catalytic cracking (FCC) unit, thermal cracking units such as a residual coking, delayed coking or fluidized coking units, the catalytic reforming (CR) unit, the hydrotreating (HT) unit, and the pressure swing adsorption (PSA) unit. The offgas stream from the FCC unit is particularly preferred.

Refinery offgas is generally characterized as including up to about 40 percent by volume of hydrogen and typically has an energy value of at least about 26081 kJ/m³ (700 Btu/SCF).

Table B is provided to illustrate the concentration of the components present in the supplemental offgas feedstock. A typical composition of a preferred offgas stream from a FCCU cryogenic residue unit is also provided in Table B.

**TABLE B**

| Component | Mole Percent Range | FCC Unit Offgas* |
|---|---|---|
| H₂ | 8 - 40 | 19.54 |
| N₂ | 0 - 10 | 7.41 |
| CH₄ | 20 - 60 | 40.47 |
| C₂H₄ | 1 - 25 | 17.79 |
| C₂H₆ | 1 - 20 | 14.37 |
| C₃H₆ | 0 - 20 | 0.06 |
| C₃H₈ | 0 - 20 | 0.37 |
| C₄H₈ | 0 - 5 | - |
| C₄H₁₀ | 0 - 8 | 1.0 |
| C₅+ | 0 - 5 | - |
| CO | 0 - 5 | 1.0 |
| CO₂ | 0 - 5 | 250 ppm |
| O₂ | - | 1000 ppm |
| Acetylene | - | 100 ppm |
| Diolefins | - | 100 ppm |
| Aromatics | - | 200 ppm |
| RSH (mercaptans) | - | 10 ppm |
| H₂S | 0 - 4 | 10 ppm |
| COS | 0 - 1 | 10 ppm |
| SOₓ | - | 15 ppm |
| NH₃ | - | 5 ppm |
| HCN | - | 10 ppm |
| Arsine | - | 20 ppb |
| Btu/SCF | 700 - 1400 | 1027 |

| | | |
|---|---|---|
| * - Values represent mole percent unless indicated otherwise. | | |

Although the preferred supplemental offgas feed used in the present process is of FCC origin, it is to be understood that offgases from other petroleum and chemical processing units can be used and may also contain species which require removal or destruction before the offgas can be combusted. For example, waste gas streams containing organic nitrogen compounds, such as amines or nitriles, when burned (fully combusted) produce NOₓ in amounts that exceed environmental discharge limits. Advantageously, in accordance with the present invention, the partial oxidation of organic nitrogen compounds generates only nitrogen, a limited amount of ammonia, and a trace of hydrogen cyanide. The latter fixed nitrogen compounds are easily separated and NOₓ formation on burning the syngas containing only N₂ is minimized.

Another of the numerous advantages associated with the process of the present invention resides in the ability to deliver a pressurized hydrogen product without having to subject the end product (i.e., hydrogen) to compression and without having to compress any of the effluent gas streams generated during the practice of the present processing steps. Specifically, any gas compression required to produce a pressurized hydrogen product occurs prior to charging the feed to the partial oxidation unit. Advantageously, at this stage the volume of gas to be compressed is at a minimum. In particular, the synthesis gas generated in the first step of the present process has a substantially increased volume relative to the volume of the feed, since there are more moles of synthesis gas produced than are present in the initial feed. By way of illustration, in the partial oxidation of a natural gas feed, which predominantly contains methane, synthesis gas is produced pursuant to the following reaction:

CH₄ + 1/2 O₂ → CO + 2H₂.

Thus, 1.5 moles of feed gas produces 3 moles of synthesis gas and, accordingly, a twofold volumetric increase is exhibited. In addition, when the carbon monoxide is reacted with steam in the shift conversion step described below, additional gas volume is generated, including hydrogen. Hence, as one skilled in the art will readily appreciate, energy and cost savings are obtained by compressing the feed material rather than the product.

Insofar as the desired pressure of the hydrogen product is known, the feed component should be pressurized, if necessary, to a pressure slightly above (e.g., about 446 kPa (50 psig)) the desired product pressure, prior to being introduced into the partial oxidation unit. Similarly, the oxygen fed into the partial oxidation unit to support the partial oxidation reaction should be pressurized slightly above the desired product pressure. The excess pressure is offset by the minute loss of pressure during the practice of the present process, as is understood by those skilled in the art.

In the practice of the present invention, the gas feed described above is preheated to a temperature of between about 93°C to 371°C (200°F to 700°F). The feed can be heated, for instance, in a fire heater or a heat exchanger.

In the first step of the present process, the gas feed is partially oxidized to produce a synthesis gas mixture of carbon monoxide and hydrogen. More specifically, as shown in Fig. 1, the preheated natural gas feed (used for illustrative purposes) is charged into a partial oxidation unit at a rate of about 0.113 million to 1.13 million std m³ per day (about 4 million to about 40 million standard cubic feet per day (mmscfd)). As discussed above, the pressure of the natural gas feed substantially corresponds (slightly higher) to the desired pressure of the end product, i.e., the hydrogen. As shown, the partial oxidation unit is also charged with an O₂ stream to permit the partial oxidation of the natural gas feed. The O₂ stream is similarly pressurized to a pressure that substantially corresponds to the desired pressure of the hydrogen product. The O₂ is introduced separately from the natural gas feed into the partial oxidation unit by a partial oxidation burner, such as the one described in U.S. Patent No. 3,874,592. The oxygen consumption rate is typically between about 115 tons per day to about 1400 tons per day.

In a preferred embodiment, the partial oxidation unit is a gasifier which includes a refractory-lined pressure vessel and auxiliary gas cooling means, such as a heat recovery steam generator or a quenching chamber, which is further discussed hereinbelow. The gasifier is typically operated at a temperature of about 1204°C (2200°F) to about 1538°C (2800°F) and a pressure of from about 1379 kPa (200 psig) to about 8375 kPa (1200 psig). Inasmuch as the process can be practiced at these elevated pressures, a final and more complicated compression of the hydrogen so produced, is not required.

The residence time of the reactants in the partial oxidation unit is usually about 2 to about 4 seconds. Thus, a predetermined quantity of the feed gas is partially oxidized in the gasifier in about 2 to about 4 seconds. In the partial oxidation unit, synthesis gas ("syngas") (i.e., carbon monoxide and hydrogen) is produced, preferably in an amount of at least about 2-3 moles of syngas per mole of gas feed.

Internal steam is also generated in the partial oxidation unit (gasifier) by quenching the syngas product produced therein, which is advantageously employed in the shift converter as described with particularity below. Before the syngas exits the partial oxidation unit, it is cooled in a quenching medium, such as water. The means for quenching the syngas (e.g., quench bath) can be contained in the partial oxidation unit or, alternatively, can be disposed outside of the unit and positioned in a manner such that the syngas can be directed through the quenching means and, thereafter, directed into the carbon monoxide shift converter.

The syngas mixture generated in accordance with the present invention includes a hydrogen content of at least about 59 percent by volume and a carbon monoxide content of at least about 30 percent by volume. The syngas mixture generated in accordance with the present process is desired since more hydrogen is produced and less CO is produced, which means that the CO shift converter is used less than would be required with heavier hydrocarbonaceous feedstocks.

In the next step, the syngas stream is directed from the partial oxidation unit into the shift converter. More particularly, hot synthesis gas from the gasifier is quickly cooled by direct contact with water, as described above, at the pressure of the synthesis gas generator (gasifier) and passed directly to the carbon monoxide shift conversion reactor. As described in U.S. Patent No. 3,545,926, sufficient water is vaporized into the hot synthesis gas to supply the steam required for the shift conversion reaction. The steam is reacted with the carbon monoxide present in the syngas to produce a raw gas mixture of carbon dioxide and hydrogen. With operating pressures circa 6894 kPa (1000 psi), the equilibrium temperature of the quenched synthesis gas is near 260°C (500°F). Since the shift converter operates at temperature from 260 to 510°C (500 to 950°F), preferably 288 to 482°C (550°F to 900°F), it may be necessary to warm the inlet gas to the shift converter by heat exchange against the exit gas. The carbon monoxide shift reaction which produces hydrogen and carbon dioxide is slightly exothermic and the temperature of the gas rises across the shift catalyst to a temperature circa 371 to 510°C (700°F to 950°F), depending upon the amount of carbon monoxide present and equilibrium conditions.

In a preferred embodiment, at least about ninety (90) percent of the carbon monoxide is converted to carbon dioxide and hydrogen. The shift conversion reaction is preferably conducted in one or more fixed-bed catalytic reactors disposed in the shift converter. In the present process, the shift conversion reaction advantageously occurs in two stages or, more appropriately, two shifts. Typically, a three (3)-stage shift conversion is employed in conventional processes for producing high purity hydrogen. Where more than one fixed-bed reactor is employed, cooling means, which by way of illustration can include an intercooler or a heat exchanger, are positioned between the various beds to prevent the temperature from getting too high, as this would adversely affect the equilibrium conversion. It is desirable to maintain the reaction temperature within a range of about 316°C (600°F) to about 538°C (1000°F) in the first shift (or stage) and from about 260°C (500°F) to about 426°C (800°F) in the second shift. Preferably, the temperature is maintained at about 454°C (850°F) in the first shift and about 343°C (650°F) in the second shift.

The catalyst employed in the shift conversion reaction preferably includes chromium and iron oxide as is known by those skilled in the art. This catalyst is used to promote the following shift reaction: CO + H₂O → CO₂ + H₂.

The shift conversion reactor also serves to destroy or retain unwanted contaminants present in the feedstock. For example, hydrogen cyanide, is hydrolyzed to form ammonia, hydrogen and carbon dioxide.

The raw gas effluent from the shift conversion step of the present process includes up to about 71 percent hydrogen, no more than about 26 percent carbon dioxide, with the remaining 3 percent being carbon monoxide and other trace components.

The next step of the present process involves purifying the raw gas mixture produced in the shift conversion reaction described above. The gas effluent exiting the shift converter consists primarily of raw carbon dioxide and hydrogen. Impurities present in the raw gas mixture typically include nitrogen, carbon monoxide, methane, hydrogen sulphide, and water. After the synthesis gas has been treated in the carbon monoxide shift converter, it is cooled to remove water. Any chloride, now present as HCl, and ammonia condense out with the water and are removed from the gas. Accordingly, the impure gas effluent is directed from the shift converter and is directly introduced into a hydrogen purification unit to remove remaining impurities from the raw effluent stream.

The purification step is performed by pressure swing adsorption and, hence, the purification unit employed is a Pressure Swing Adsorption (PSA) unit (as shown) which removes the impurities from the raw stream by use of a pressure change on the adsorbent beds. This facilitated means of acid-gas removal and hydrogen purification is another significant feature of the present invention. In conventional processes, the raw stream would typically undergo treatment with an amine solution, followed by a methanation process, followed by a copper liquor washing process and, finally, followed by a molecular sieve dryer process.

As shown in Fig. 1, two effluent streams emerge from the PSA unit. One of the streams is a reject gas which includes the separated impurities, such as N₂, CO₂, CO, CH₄, NH₃, and H₂S. Also included in the reject gas stream is the balanced amount of unrecovered H₂.

The second stream emerging from the PSA unit is high purity hydrogen. The hydrogen produced by the process of this invention is at least about 99 percent pure and, more typically, is 99.9 percent pure. The high purity hydrogen produced is recovered using conventional means and can be used in a variety of applications. These include, but are not limited to, hydrotreating, hydroprocessing, hydrocracking, methanol production, oxoalcohol production, isomerization processes, products produced via a Fisher-Tropsch type procedure, etc.

The process of this invention includes additional embodiments which essentially involve the optional treatment and/or use of the reject gas exiting the PSA unit. It is to be understood that in each of the additional embodiments described below, practice of the invention includes the process steps described above.

In one such additional embodiment, the reject gas is recycled to the shift converter to enhance the recovery of hydrogen. This embodiment can enhance the recovery of hydrogen by about 5 to about 15 percent. In particular, referring to Fig. 2, the reject gas exiting the PSA unit is first fed to an acid gas removal unit to recover carbon dioxide as a by-product and hydrogen sulfide prior to entering the CO shift converter. Acid gas removal can be effectuated by the well known Benfield Process or amine solution processes, where the operative amine solutions include, by way of illustration, monoethanolamine (MEA), diethanolamine (DEA) or Selexol, a polyethoxyether. A portion of the reject gas from the acid gas removal unit is boosted in pressure in a pressure booster and then directed into the shift converter, either by introducing it into the syngas feed stream (as shown) or, alternatively, by directly introducing it into the shift converter. In any event, the objective is to permit the reject gas to co-mingle with the synthesis gas mixture so that the reject gas is permitted to react with the steam in the shift converter to convert carbon monoxide present in the reject gas into the raw gas mixture described above.

Inasmuch as it is necessary to provide a means to remove inert gases, such as nitrogen, from the system, part of the reject gas from the acid gas scrubber is drawn off as shown at stream (H). Since this stream contains essentially only methane, carbon monoxide and hydrogen in addition to nitrogen, it is clean burning fuel.

The amount of clean burning fuel stream (H) which can be used as fuel is dependent on the amount of nitrogen present. It is to be noted that the heating value of the bleed as (stream (H)) needs to be maintained at not less than 5589 kJ/m³ (150 Btu/SCF), preferably 9315 kJ/m³ (250 Btu/SCF) to produce a good quality fuel. Generally, sufficient acid gas scrubber reject gas should be drawn off to keep the nitrogen content below 30 percent. Removal of the acid gases, in particular the carbon dioxide, prior to diversion to fuel greatly improves the heating quality of the gas, as well as improve recovery of hydrogen from that portion of the acid gas scrubber reject gas reinjected into the carbon monoxide shift converter feed.

In a second alternative embodiment, the reject gas is directed from the purification unit (e.g., PSA unit) to a burner where it can be used as a fuel source to preheat feedstreams to the partial oxidation unit or to the carbon monoxide shift unit or for any other processing units in the installation. From the environmental perspective, the reject gas from the PSA unit is a favorable fuel source, since it is completely devoid of olefins and other unsaturates. Accordingly, the flame it produces when heated does not produce environmentally unacceptable levels of soot.

In a third alternative embodiment, the PSA unit reject gas is treated to remove hydrogen sulphide which can subsequently be processed to obtain elemental sulphur. This embodiment is particularly beneficial where there are relatively considerable amounts of hydrogen sulphide in the gas feed. The hydrogen sulphide can be removed from the PSA unit reject stream in any known manner. One way of effectuating its removal includes directing the reject stream through an acid-gas scrubber to remove any hydrogen sulphide from the reject stream.

The removal of hydrogen sulphide from the PSA unit reject gas is preferred over removing it from the gas feed. Where sulphur is present in the original feed, it is usually combined in part with organic matter, making its removal more difficult than it would be to remove hydrogen sulphide from the PSA via acid gas scrubbing. The sequence of gasification followed by conversion shifting makes sulphur more available by acid gas extraction.

Elemental sulphur can be produced in any known manner; oxidation processes, such as the Claus system, are generally preferred.

The following examples are offered to further illustrate the manner and means for practicing certain embodiments of the present invention.

### EXAMPLE III

This example is offered to illustrate a preferred manner of practicing the process of the present invention without the optional recycle step. In Table C, preferred pressure, temperature and flow rate parameters are provided for each of the gas streams involved in the process. In Table D, the components which are included in each gas stream are provided in moles on a dry basis. In both Table C and Table D, each gas stream is represented by a written character as follows:
- A -: offgas feed entering the partial oxidation unit
- B -: gas effluent from the partial oxidation unit (primarily syngas) which enters the shift converter
- C -: gas effluent from the shift converter which enters the purifier (e.g., PSA Unit)
- D -: high purity H₂ stream from the purifier
- E -: reject gas stream (tail gas) from the purifier

**TABLE C**

| Parameters | Gas Streams | | | | |
|---|---|---|---|---|---|
| | A | B | C | D | E |
| Pressure kPa (psig) | 7587 (1100) | 7070 (1025) | 6622 (960) | 6553 (950) | 103 (15) |
| Temperature °C (°F) | 316 (600) | 343 (650) | 38 (100) | 43 (110) | 32 (90) |
| Flow million std m³ per day (mmscfd) | 0.35 (12.4) | 1.1 (39.0) | 1.47 (52.0) | 0.85 (30) | 0.62 (22.0) |

**TABLE D**

| Component | Gas Streams | | | | |
|---|---|---|---|---|---|
| | A | B | C | D | E |
| H2 | 0 | 60.41 | 70.27 | 99.90 | 29.80 |
| N₂ | 0.4 | 0.13 | 0.1 | 0.10 | 0.20 |
| CH₄ | 82.60 | 0.4 | 0.3 | - | 0.70 |
| C₂H₆ | 8.61 | - | - | - | - |
| C₃H₈ | 3.80 | - | - | - | - |
| C₄H₁₀ | 1.91 | - | - | - | - |
| C₅ + | 0.92 | - | - | - | - |
| CO | - | 36.89 | 2.76 | 10 ppm (max) | 6.50 |
| CO₂ | 1.76 | 2.05 | 26.57 | - | 62.80 |
| H₂S | 50 ppm (max) | 16 ppm | 12 ppm | - | 28 ppm |
| H₂O | unsat.d | sat.d | sat.d | dry | sat.d |

### EXAMPLE IV

This example is offered to illustrate a preferred manner of practicing an alternative embodiment of the process of this invention which includes the optional step of recycling the reject gas from the PSA unit through an acid gas removal unit and then into the syngas stream before it enters the shift converter, to enhance the recovery of H₂. Tables E and F show the operating parameters and the components concentration in moles on a dry basis, respectively. Streams A - E are the same as used in Tables C and D. In Tables E and F, gas streams F, G and H are representative of the following:
- F -: carbon dioxide stream from the acid gas removal unit
- G -: slipstream effluent from the CO₂ removal unit which re-enters the shift converter along with unconverted syngas
- H -: bleed stream of offgas effluent from the CO₂ removal unit taken to control buildup of inerts (nitrogen) in system, used as clean burning fuel

**TABLE E**

| Parameters | Gas Streams | | | | | | | |
|---|---|---|---|---|---|---|---|---|
| | A | B | C | D | E | F | G | H |
| Pressure kPa (psig) | 7587 (1100) | 7070 (1025) | 6622 (960) | 6553 (950) | 103 (15) | 103 (15) | 7070 (1025) | 103 (15) |
| Temperature °C (°F) | 316 (600) | 343 (650) | 38 (100) | 43 (110) | 32 (90) | 32 (90) | 38 (100) | 38 (100) |
| Flow million std m³ per day (mmscfd) | 0.31 (11.0) | 0.98 (34.8) | 1.5 (53.2) | 0.85 (30) | 0.65 (23.2) | 0.39 (13.7) | 0.14 (5.0) | 0.13 (4.5) |

**TABLE F**

| Components | Gas Streams | | | | | | |
|---|---|---|---|---|---|---|---|
| | A | B | C | D | E | F | G & H |
| H₂ | 0 | 60.41 | - | 99.90 | 33.6 | - | 82.4 |
| N₂ | 0.4 | 0.13 | - | 0.10 | 0.3 | - | 0.8 |
| CH₄ | 82.60 | 0.4 | - | - | 1.0 | - | 2.4 |
| C₂H₆ | 8.61 | - | - | - | - | - | - |
| C₃H₈ | 3.80 | - | - | - | - | - | - |
| C₄H₁₀ | 1.91 | - | - | - | - | - | - |
| C₅ + | 0.92 | - | - | - | - | - | - |
| CO | - | 36.89 | - | 10 ppm (max) | 5.9 | - | 14.4 |
| CO₂ | 1.76 | 2.05 | - | - | 59.2 | 100 | - |
| H₂S | 50 ppm (max) | 16 ppm | 10 ppm | - | 24 ppm | 40 ppm | - |
| H₂O | unsat.d | sat.d | sat.d | dry | sat.d | - | - |

## Claims

1. A process for producing high purity hydrogen which essentially comprises (1) partially oxidizing a refinery offgas feedstock to produce a synthesis gas mixture of carbon monoxide and hydrogen or partially oxidizing a gaseous hydrocarbonaceous feedstock to produce a synthesis gas mixture of carbon monoxide and hydrogen, said feedstock having a major component which includes at least one C₁-C₃ hydrocarbon and said major component having an average molecular weight of up to 30, (2) reacting said synthesis gas mixture with steam to convert said carbon monoxide into a raw gas mixture which primarily includes carbon dioxide and hydrogen, and (3) purifying said raw gas mixture by pressure swing adsorption to produce high purity hydrogen and a reject gas mixture of impurities.

2. A process according to Claim 1 which further comprises preheating said feedstock to a temperature of about 93°C (200°F) to about 371°C (700°F) prior to the step of partially oxidizing said feedstock.

3. A process according to Claim 1 or Claim 2 which further comprises quenching said synthesis gas mixture prior to performing step (2).

4. A process according to any one of Claims 1 - 3 wherein the steam employed in step (2) is generated by quenching the product resulting from the partial oxidation of said feedstock.

5. A process according to any one of Claims 1 - 4 wherein the conversion of carbon monoxide into said raw gas mixture occurs in two stages.

6. A process according to Claim 5 wherein the reaction occurring in the first stage takes place at a temperature of about 316°C (600°F) to about 538°C (1000°F) and the reaction occurring in the second stage takes place at a temperature of about 260°C (500°F) to about 426°C (800°F).

7. A process according to Claim 5 wherein the reaction occurring in the first stage takes place at a temperature of about 454°C (850°F) and the reaction occurring in the second stage takes place at a temperature of about 343°C (650°F).

8. A process according to any one of Claims 1 - 7 which further comprises recycling said reject gas mixture of impurities in a manner such that said reject gas mixture co-mingles with said synthesis gas mixture, whereby said reject gas mixture is permitted to react with steam to convert any excess carbon monoxide remaining in said reject gas mixture into hydrogen and carbon dioxide, thereby enhancing the production of high purity hydrogen.

9. A process according to Claim 8 which further comprises recovering a substantial amount of carbon dioxide present in said reject gas mixture prior to the step of recycling said reject gas mixture, in order to maximise the conversion of said excess carbon monoxide.

10. A process according to any one of Claims 1 - 7 which further comprises directing said reject gas mixture to a burner to enable said heated reject gas mixture to be used as a fuel source.

11. A process according to any one of Claims 1 - 10 which further comprises recovering a substantial amount of hydrogen sulphide present in said reject gas mixture and processing said hydrogen sulphide to produce elemental sulphur.

12. A process according to Claim 11 wherein said amount of hydrogen sulphide is recovered by directing said reject gas mixture through an acid-gas scrubber in a manner such that said hydrogen sulphide is removed from said reject gas mixture.

13. A process according to any one of Claims 1 - 12 which comprises the preliminary step of pressurizing said gaseous hydrocarbonaceous feedstock to a pressure slightly above the desired pressure of the hydrogen product, prior to said partial oxidation thereof.

14. A process according to any one of Claims 1 - 13 wherein said feedstock is partially oxidized at a temperature of about 1204°C (2200°F) to about 1538°C (2800°F) and in the absence of a catalyst.

## Patentansprüche

1. Verfahren zum Erzeugen von hochreinem Wasserstoff, das im wesentlichen umfaßt (1) teilweises Oxidieren eines Raffinerie-Abgasausgangsprodukts zum Erzeugen einer Synthesegasmischung aus Kohlenmonoxid und Wasserstoff oder teilweises Oxidieren eines gasförmigen kohlenwasserstoffhaltigen Ausgangsprodukts zum Erzeugen einer Synthesegasmischung aus Kohlenmonoxid und Wasserstoff, wobei das Ausgangsprodukt einen Hauptbestandteil aufweist, der mindestens einen C₁-C₃-Kohlenwasserstoff aufweist und wobei dieser Hauptbestandteil ein durchschnittliches Molekulargewicht von bis zu 30 aufweist, (2) Umsetzen dieser Synthesegasmischung mit Wasserdampf zum Umwandeln des Kohlenmonoxids in eine Rohgasmischung, die hauptsächlich Kohlendioxid und Wasserstoff umfaßt und (3) Reinigen der Rohgasmischung durch Druck-Schwingadsorption zum Erzeugen von hochreinem Wasserstoff und einer Abgangsgasmischung von Verunreinigungen.

2. Verfahren nach Anspruch 1, das weiter umfaßt das Vorwärmen des Ausgangsprodukts auf eine Temperatur von etwa 93°C (200°F) bis etwa 371°C (700°F) vor dem Schritt des teilweisen Oxidierens des Ausgangsprodukts.

3. Verfahren nach Anspruch 1 oder Anspruch 2, das weiter umfaßt das Abschrecken der Synthesegasmischung vor der Durchführung des Schritts (2).

4. Verfahren nach irgendeinem der Ansprüche 1 - 3, wobei der in Schritt (2) verwendete Wasserdampf erzeugt wird, indem das sich aus der teilweisen Oxidation des Ausgangsprodukts ergebende Produkt abgeschreckt wird.

5. Verfahren nach irgendeinem der Ansprüche 1 - 4, wobei die Umwandlung von Kohlenmonoxid zu der Rohgasmischung in zwei Stufen erfolgt.

6. Verfahren nach Anspruch 5, wobei die in der ersten Stufe auftretende Reaktion bei einer Temperatur von etwa 316°C (600°F) bis etwa 538°C (1.000°F) und die in der zweiten Stufe auftretende Reaktion bei einer Temperatur von etwa 260°C (500°F) bis etwa 426°C (800°F) stattfinden.

7. Verfahren nach Anspruch 5, wobei die in der ersten Stufe stattfindende Reaktion bei einer Temperatur von etwa 454°C (850°F) und die in der zweiten Stufe auftretende Reaktion bei einer Temperatur von etwa 343°C (650°F) stattfinden.

8. Verfahren nach irgendeinem der Ansprüche 1 - 7, das weiter umfaßt das Zurückführen der Abgangsgasmischung der Verunreinigungen in einer solchen Weise, daß sich die Abgangsgasmischung mit der Synthesegasmischung vermischt, wodurch die Abgangsgasmischung mit Wasserdampf reagieren kann, um jegliches überschüssiges Kohlenmonoxid in der Abgangsgasmischung zu Wasserstoff und Kohlendioxid umzuwandeln, wodurch die Herstellung von hochreinem Wasserstoff gesteigert wird.

9. Verfahren nach Anspruch 8, das weiter umfaßt das Rückgewinnen einer wesentlichen Menge von in der Abgangsgasmischung enthaltenem Kohlendioxid vor dem Schritt des Zurückführens der Abgangsgasmischung, um die Umwandlung des überschüssigen Kohlenmonoxids zu maximieren.

10. Verfahren nach irgendeinem der Ansprüche 1 - 7, das weiter umfaßt das Zuführen der Abgangsgasmischung zu einem Brenner, um die erhitzte Abgangsgasmischung als Brennstoffquelle verwenden zu können.

11. Verfahren nach irgendeinem der Ansprüche 1 - 10, das weiter umfaßt das Rückgewinnen einer wesentlichen Menge von in der Abgangsgasmischung enthaltenem Schwefelwasserstoff und das Behandeln dieses Schwefelwasserstoffs zur Erzeugung von elementarem Schwefel.

12. Verfahren nach Anspruch 11, wobei diese Schwefelwasserstoffmenge zurückgewonnen wird, indem die Abgangsgasmischung durch einen Säure/Gas-Reiniger in einer solchen Weise hindurchgeführt wird, daß der Schwefelwasserstoff aus der Abgangsgasmischung entfernt wird.

13. Verfahren nach irgendeinem der Ansprüche 1 - 12, das umfaßt den vorbereitenden Schritt des Unterdrucksetzens des gasförmigen, kohlenwasserstoffhaltigen Ausgangsprodukts auf einen Druck etwas oberhalb des gewünschten Drucks des Wasserstoffsprodukts vor dessen teilweisen Oxidation.

14. Verfahren nach irgendeinem der Ansprüche 1 - 13, wobei das Ausgangsprodukt bei einer Temperatur von etwa 1.204°C (2.200°F) bis etwa 1.538°C (2.800°F) und in Abwesenheit eines Katalysators teilweise oxidiert wird.

## Revendications

1. Procédé de production d'hydrogène de haute pureté, selon lequel (1) on oxyde partiellement une charge de départ à base d'effluent gazeux de raffinerie, pour produire un mélange de gaz de synthèse à base de monoxyde carbone et d'hydrogène, ou on oxyde partiellement une charge de départ hydrocarbonée gazeuse, pour produire un mélange de gaz de synthèse à base de monoxyde de carbone et d'hydrogène, cette charge de départ comprenant un composant principal qui contient au moins un hydrocarbure en C₁-C₃ et ce composant principal ayant un poids moléculaire moyen allant jusqu'à 30, (2) on fait réagir ce mélange de gaz de synthèse avec de la vapeur d'eau, pour convertir le monoxyde de carbone en un mélange de gaz brut comprenant principalement du dioxyde de carbone et de l'hydrogène, et (3) on purifie ce mélange de gaz brut par adsorption sous pression alternée, pour produire de l'hydrogène de haute pureté et un mélange gazeux résiduaire d'impuretés.

2. Procédé selon la revendication 1, comprenant en outre le préchauffage de la charge de départ à une température d'environ 93°C (200°F) jusqu'à environ 371°C (700 °F), avant l'opération d'oxydation partielle de la charge de départ.

3. Procédé selon la revendication 1 ou 2, comprenant en outre le refroidissement brusque du mélange de gaz de synthèse avant d'effectuer l'étape (2).

4. Procédé selon l'une quelconque des revendications 1 à 3, dans lequel la vapeur d'eau employée dans l'étape (2), est générée par refroidissement brusque du produit résultant de l'oxydation partielle de la charge de départ.

5. Procédé selon l'une quelconque des revendications 1 à 4, dans lequel la conversion du monoxyde de carbone en le mélange de gaz brut, est effectuée en deux phases.

6. Procédé selon la revendication 5, dans lequel la réaction ayant lieu dans la première phase, est effectuée à une température d'environ 316 °C (600 °F) à environ 538°C (1000°F), et la réaction ayant lieu dans la deuxième phase, est effectuée à une température d'environ 260 °C (500 °F) à environ 426 °C (800 °F).

7. Procédé selon la revendication 5, dans lequel la réaction ayant lieu dans la première phase, est effectuée à une température d'environ 454 °C (850 °F) et la réaction ayant lieu dans la deuxième phase, est effectuée à une température d'environ 343 °C (650 °F).

8. Procédé selon l'une quelconque des revendications 1 à 7, comprenant en outre le recyclage du mélange de gaz résiduaire d'impuretés de telle façon que ce mélange de gaz résiduaire se mélange avec ledit mélange de gaz de synthèse, de sorte que l'on permet au mélange de gaz résiduaire, de réagir avec de la vapeur d'eau pour convertir le monoxyde de carbone en excès restant dans le mélange de gaz résiduaire, en hydrogène et en dioxyde de carbone, de façon à accroître la production d'hydrogène de haute pureté.

9. Procédé selon la revendication 8, comprenant en outre la récupération d'une quantité importante de dioxyde de carbone présent dans le mélange de gaz résiduaire, avant l'opération de recyclage de ce mélange de gaz résiduaire, afin de maximiser la conversion de ce monoxyde carbone en excès.

10. Procédé selon l'une quelconque des revendications 1 à 7, comprenant en outre l'orientation de ce mélange de gaz résiduaire, vers un brûleur pour permettre l'emploi de ce mélange de gaz résiduaire chauffé, comme source de combustible.

11. Procédé selon l'une quelconque des revendications 1 à 10, comprenant en outre la récupération d'une quantité importante de sulfure d'hydrogène présent dans le mélange de gaz résiduaire, et le traitement du sulfure d'hydrogène pour produire du soufre élémentaire.

12. Procédé selon la revendication 11, dans lequel ladite quantité de sulfure d'hydrogène, est récupérée en dirigeant le mélange de gaz résiduaire à travers un épurateur à gaz acide de façon à ce que le sulfure d'hydrogène soit séparé du mélange de gaz résiduaire.

13. Procédé selon l'une quelconque des revendications 1 à 12, comprenant l'opération préliminaire de compression de la charge gazeuse hydrocarbonée de départ, jusqu'à une pression légèrement supérieure à la pression requise de l'hydrogène produit, avant son oxydation partielle.

14. Procédé selon l'une quelconque des revendications 1 à 13, dans lequel la charge de départ est partiellement oxydée à une température d'environ 1204 °C (2200 °F) à environ 1538 °C (2800 °F) et en l'absence de catalyseur.
